# EUROPEAN PATENT APPLICATION

(11) **EP 4 223 844 A1**
(43) Date of publication of application: **09.08.2023**
(21) Application number: 21875150.1
(22) Date of filing: 10.09.2021
(51) Int. Cl.: C09B 63/00, B41J 2/01, C09D 11/322, B41M 5/00

(54) **INKJET YELLOW INK, IMAGE RECORDING METHOD, AND IMAGE RECORDED MATTER**

(30) Priority: 29.09.2020 JP 2020163391
(71) Applicant: FUJIFILM Corporation, Tokyo 106-8620 (JP)
(72) Inventor: KAERIYAMA Atsushi, Ashigarakami-gun, Kanagawa 258-8577 (JP)
(74) Representative: Klunker IP Patentanwälte PartG mbB
(86) International application number: PCT/JP2021/033431
(87) International publication number: WO 2022/070848

(57) **Abstract**

Provided are inkjet yellow ink and an image recording method that make it possible to record a yellow image having excellent weather resistance, and image recording matter including a yellow image having excellent weather resistance. inkjet yellow ink according to the present invention contains a yellow lake pigment, a yellow pigment other than a yellow lake pigment, a resin, a water-soluble organic solvent, and water.

## Description

### BACKGROUND OF THE INVENTION

### 1. Field of the Invention

The present disclosure relates to a yellow ink for ink jet, an image recording method, and an image recorded article.

### 2. Description of the Related Art

In recent years, studies have been made on a yellow ink for ink jet.

For example, it is disclosed in JP4522646B that a yellow ink for inkjet recording that has high fastness and enables stable recording of a high-quality image over a long period of time under any circumstances, in which in the yellow ink for ink jet recording composed of a polymer dispersant, a water-insoluble coloring material, a water-soluble organic solvent, and water, the water-insoluble coloring material is at least one or more selected from the group consisting of C.I. Solvent Yellow 21, C.I. Solvent Yellow 42, C.I. Solvent Yellow 79, C.I. Solvent Yellow 82, C.I. Solvent Yellow 83:1, C.I. Solvent Yellow 88, C.I. Solvent Yellow 151, the polymer dispersant is a block copolymer composed of a hydrophobic block and a hydrophilic block, and is obtained by polymerization of vinyl ethers as a monomer, the hydrophilic block being composed of anionic vinyl ethers, the water-insoluble coloring material is further encapsulated with the polymer dispersant, and a dispersion of the water-insoluble coloring material, which is dispersed by the polymer dispersant, has an average particle diameter of 80 nm or less.

It is disclosed in JP5142487B that, as a novel ink for ink jet that prevents bleeding and further provides an image having excellent color developability, the ink for inkjet contains water, a coloring material, and a water-soluble organic solvent, in which the coloring material is one or more dyes selected from the group consisting of C.I. Direct Yellow 86, C.I. Acid Yellow 23, C.I. Direct Yellow 173, C.I. Direct Yellow 132, and C.I. Direct Yellow 59, and C.I. Pigment Yellow 74, the ink has a surface tension of 34.0 mN/m or more, the water-soluble organic solvent is a poor solvent for the C.I. Pigment Yellow 74, and a ratio (B/A) of a content B (% by mass) of the poor solvent to a content A (% by mass) of the C.I. Pigment Yellow 74 in the ink is 0.75 or more and 4 or less.

### SUMMARY OF THE INVENTION

It may be required to improve weather fastness (specifically, properties in which light resistance, color developability, and solvent resistance are integrated) of a yellow image recorded by using the yellow ink for inkjet.

However, a yellow image recorded by using an ink containing a lake yellow pigment may have excellent solvent resistance, but may not have excellent light resistance and color developability, and as a result, weather fastness may be insufficient.

On the other hand, a yellow image recorded by using an ink containing a yellow pigment other than the lake yellow pigment may have excellent light resistance and color developability, but may not have excellent solvent resistance, and as a result, weather fastness may be insufficient.

An object of one aspect of the present disclosure is to provide a yellow ink for ink jet and an image recording method, which enable recording of a yellow image having excellent weather fastness, and an image recording method provided with a yellow image having excellent weather fastness.

The specific means for achieving the above-described object includes the following aspects.
<1> A yellow ink for inkjet comprising a yellow pigment containing a lake yellow pigment and a yellow pigment other than the lake yellow pigment; a resin; a water-soluble organic solvent; and water.
<2> The yellow ink for ink jet according to <1>, in which a ratio of a content of the lake yellow pigment to a total of a content of the yellow pigment is 10% by mass to 90% by mass.
<3> The yellow ink for inkjet according to <1> or <2>, in which the yellow pigment other than the lake yellow pigment is at least one selected from the group consisting of Pigment Yellow 1, Pigment Yellow 2, Pigment Yellow 3, Pigment Yellow 5, Pigment Yellow 6, Pigment Yellow 10, Pigment Yellow 49, Pigment Yellow 60, Pigment Yellow 65, and Pigment Yellow 73, Pigment Yellow 74, Pigment Yellow 75, Pigment Yellow 97, Pigment Yellow 98, Pigment Yellow 111, Pigment Yellow 116, Pigment Yellow 130, Pigment Yellow 165, Pigment Yellow 167, and Pigment Yellow 203.
<4> The yellow ink for inkjet according to any one of <1> to <3>, in which the lake yellow pigment is at least one selected from the group consisting of Pigment Yellow 61, Pigment Yellow 62, Pigment Yellow 133, Pigment Yellow 168, Pigment Yellow 169, Pigment Yellow 205, Pigment Yellow 206, Pigment Yellow 209, and Pigment Yellow 212.
<5> The yellow ink for ink jet according to any one of <1> to <4>, in which the resin contains a pigment dispersion resin A and a resin B that is a resin other than the pigment dispersion resin A.
<6> The yellow ink for ink jet according to <5>, in which the resin B contains a unit X, which is a structural unit derived from a monomer having a ClogP of 2.80 to 5.00, and
   in a case where a structural unit derived from a monomer having a ClogP of 2.30 or more in the resin B is denoted by a unit Y, a ratio of the unit X to a total amount of the unit Y is 60% by mass to 100% by mass.
<7> The yellow ink for ink jet according to <5> or <6>, in which the resin B has a ClogP of 0.90 to 1.50.
<8> An image recording method comprising a step of applying the yellow ink for ink jet according to any one of <1> to <7> onto a recording medium by an ink jet method.
<9> An image recorded article comprising: a recording medium; and
   a yellow image disposed on the recording medium and formed with the yellow ink for inkjet according to any one of <1> to <7>.

According to one aspect of the present disclosure, a yellow ink for inkjet and an image recording method, which enable recording of a yellow image having excellent weather fastness, and an image recording method provided with a yellow image having excellent weather fastness are provided.

### DESCRIPTION OF THE PREFERRED EMBODIMENTS

Hereinafter, the contents of the present disclosure will be described in detail.

The configuration requirements will be described below based on the representative embodiments of the present disclosure, but the present disclosure is not limited to such embodiments.

In the present disclosure, a term "to" showing a range of numerical values is used as a meaning including a lower limit value and an upper limit value disclosed before and after the term.

In a range of numerical values described in stages in the present disclosure, the upper limit value or the lower limit value described in one range of numerical values may be replaced with an upper limit value or a lower limit value of the range of numerical values described in other stages. In addition, in a range of numerical values described in the present disclosure, the upper limit value or the lower limit value of the range of numerical values may be replaced with values illustrated in the examples.

In the present disclosure, in a case where a plurality of substances corresponding to individual components are present in a composition, unless otherwise specified, the amount of each component in the composition means the total amount of the plurality of components present in the composition.

The term "solid content" in the present disclosure means a component excluding a solvent, and a liquid component such as a low molecular weight component other than a solvent is also included in the "solid content" in the present specification.

The term "solvent" in the present disclosure is used to include water, an organic solvent, and a mixed solvent of water and an organic solvent.

In the present disclosure, either or both of acrylic and methacrylic may be referred to as "(meth)acrylic". For example, "(meth)acrylic acid" includes both acrylic acid and methacrylic acid.

In the present disclosure, either or both of acrylate and methacrylate may be referred to as "(meth)acrylate".

In the present disclosure, the term "step" includes not only an independent step but also a step provided that the intended purpose of the step is achieved even in a case where the step cannot be clearly distinguished from other steps.

Compounds not specified as substituted or unsubstituted in the present disclosure may have any substituent as long as the effects in the present disclosure are not impaired.

In the present disclosure, a combination of preferable aspects is the more preferable aspect.

The weight-average molecular weight (Mw) in the present disclosure is measured by gel permeation chromatography (GPC).

HLC-8220GPC (manufactured by TOSOH CORPORATION) is used as the GPC, three columns, TSKgeL Super HZ2000, TSKgeL Super HZ4000, and TSKgeL Super HZ-H (all manufactured by TOSOH CORPORATION, 4.6 mm × 15 cm) are connected in series, and NMP (N-methylpyrrolidone) is used as an eluent. The sample concentration is 0.3% by mass, the flow rate is 0.35 ml/min, the sample injection amount is 10 µL, the measurement temperature is 40°C, and the refractive index (RI) detector (differential refractive index detector) is used as a detector. The calibration curve is prepared using 6 samples of "F-80", "F-20", "F-4", "F-2", "A-5000", and "A-1000", which are "Standard Samples TSK standard, polystyrene" manufactured by TOSOH CORPORATION.

In the present disclosure, "Pigment Yellow" means C.I. (Color index) Pigment Yellow. In the present disclosure, "Pigment Yellow" may be referred to as "PY".

### [Yellow Ink for Ink Jet]

### <Yellow Pigment Other Than lake Yellow Pigment (Other Yellow Pigment)>

A yellow ink for ink jet (hereinafter, simply referred to as an "ink") of the present disclosure contains a yellow pigment containing a lake yellow pigment and a yellow pigment other than the lake yellow pigment, a resin, a water-soluble organic solvent, and water.

The ink of the present disclosure enables recording of a yellow image having excellent weather fastness.

The weather fastness in the present disclosure refers to properties in which light resistance, color developability, and solvent resistance are integrated. Therefore, in a case where any one of the light resistance, the color developability, or the solvent resistance is deteriorated, the weather fastness is deteriorated. Regarding an evaluation method for such weather fastness, a weather fastness evaluation in Examples can be referred to.

It is considered that the reason why the above-described effect of the ink of the present disclosure is exhibited is that the lake yellow pigment in the ink ensures the solvent resistance of the yellow image, and the yellow pigment other than the lake yellow pigment in the ink ensures the light resistance and color developability of the yellow image.

It is considered that the water-soluble organic solvent in the ink of the present disclosure contributes to ensuring jettability from an ink jet head (hereinafter, also simply referred to as "jettability of ink").

It is considered that a resin in the ink of the present disclosure contributes to the improvement of image quality in a case where droplets of the ink applied on a substrate are dried to obtain a yellow image.

As long as the above-described effect is maintained, the ink of the present disclosure may contain, as a yellow pigment, a lake yellow pigment and a pigment other than the lake yellow pigment. For example, pigments other than yellow, inorganic pigments, fluorescent pigments, or the like may be added in order to adjust the transparency and the color tone. From the viewpoint of effectively improving the quality of the yellow image, it is preferable to use only the lake yellow pigment and the yellow pigment other than the lake yellow pigment, as a yellow pigment.

### <Lake Yellow Pigment>

The ink of the present disclosure contains at least one lake yellow pigment (that is, a yellow pigment that is a lake pigment).

From the viewpoint of further improving the weather fastness of a yellow image (hereinafter, also simply referred to as an "image"), the lake yellow pigment is preferably an azo lake yellow pigment, and is more preferably at least one selected from the group consisting of Pigment Yellow 61, Pigment Yellow 62, Pigment Yellow 133, Pigment Yellow 168, Pigment Yellow 169, Pigment Yellow 205, Pigment Yellow 206, Pigment Yellow 209, and Pigment Yellow 212.

### <Yellow Pigment Other Than Lake Yellow Pigment>

The ink of the present disclosure contains at least one yellow pigment other than the lake yellow pigment.

Therefore, the light resistance and the color developability of the image are improved.

From the viewpoint of further improving the weather fastness of the image, a yellow pigment other than the lake yellow pigment is preferably an azo yellow pigment, and is preferably at least one selected from the group consisting of Pigment Yellow 1, Pigment Yellow 2, Pigment Yellow 3, Pigment Yellow 5, Pigment Yellow 6, Pigment Yellow 10, Pigment Yellow 49, Pigment Yellow 60, Pigment Yellow 65, and Pigment Yellow 73, Pigment Yellow 74, Pigment Yellow 75, Pigment Yellow 97, Pigment Yellow 98, Pigment Yellow 111, Pigment Yellow 116, Pigment Yellow 130, Pigment Yellow 165, Pigment Yellow 167, and Pigment Yellow 203.

From the viewpoint of the weather fastness of the yellow image, a ratio of the lake yellow pigment to a total of yellow pigments (a total of contents of the lake yellow pigment and the yellow pigment other than the lake yellow pigment) contained in the ink of the present disclosure is preferably 10% by mass to 90% by mass, more preferably 20% by mass to 80% by mass, and still more preferably 30% by mass to 70% by mass.

A total content of the yellow pigments (a total amount of the lake yellow pigment and the yellow pigment other than the lake yellow pigment) contained in the ink of the present disclosure is preferably 1% by mass to 20% by mass, more preferably 2% by mass to 15% by mass, and still more preferably 3% by mass to 10% by mass, with respect to a total amount of the ink.

### <Preferable Combination of Lake Yellow Pigment and Yellow Pigment Other Than Lake Yellow Pigment>

From the viewpoint of the weather fastness of a recorded yellow image in the ink of the present disclosure, a combination of the lake yellow pigment and the yellow pigment other than the lake yellow pigment is preferably a combination in which the lake yellow pigment is at least one selected from the group consisting of Pigment Yellow 168, Pigment Yellow 169, Pigment Yellow 209, and Pigment Yellow 61, and the yellow pigment other than the lake yellow pigment is at least one selected from the group consisting of Pigment Yellow 65, Pigment Yellow 74, Pigment Yellow 10, and Pigment Yellow 203, and is more preferably a combination in which the lake yellow pigment is Pigment Yellow 168 or Pigment Yellow 169, and the yellow pigment other than the lake yellow pigment is Pigment Yellow 74 or Pigment Yellow 65.

### <Resin>

The ink of the present disclosure contains at least one resin.

### (Pigment Dispersion Resin A)

A resin in the ink of the present disclosure preferably contains at least one pigment dispersion resin A. Therefore, the dispersion stability of the yellow pigment (hereinafter, also simply referred to as a "pigment") in the ink is further improved.

As the pigment dispersion resin A, for example, a resin that adheres to a part or the entire surface of the pigment and functions as a dispersing agent to disperse the pigment.

The pigment dispersion resin A preferably contains at least one acid group selected from the group consisting of a phosphoric acid group, a sulfonic acid group (a sulfo group), and a carboxylic acid group (a carboxy group).

In a case in which the pigment dispersion resin A contains an acid group, the dispersibility of a hydrophobic pigment in water can be enhanced.

The pigment dispersion resin A more preferably contains a carboxylic acid group as an acid group.

The acid group may be introduced into the polymer by polymerization of a monomer containing the acid group. The pigment dispersion resin A preferably contains a structural unit derived from a monomer containing an acid group.

A preferable aspect of the structural unit derived from the acid group and the monomer containing an acid group, which can be applied to the pigment dispersion resin A, is the same as a preferable aspect of a structural unit derived from an acid group and a monomer containing an acid group, which can be applied to a resin B described later.

In a case where the pigment dispersion resin A is a copolymer containing a structural unit derived from a monomer containing an acid group, a content ratio of the structural unit derived from the monomer containing an acid group in the pigment dispersion resin A is preferably 5% by mass to 40% by mass and more preferably 8% by mass to 20% by mass with respect to a total amount of the pigment dispersion resin A, from the viewpoint of the pigment dispersibility.

The pigment dispersion resin A preferably contains an aromatic ring. The aromatic ring may be introduced into the polymer by polymerization of a monomer containing an aromatic ring as a structural unit derived from a monomer containing an aromatic ring. In a case where the pigment dispersion resin A contains an aromatic ring, the pigment dispersion resin A becomes hydrophobic due to an action of the aromatic ring present in the resin, and the pigment dispersion resin A thus easily adheres to a pigment. Therefore, the pigment dispersion resin A can improve the stability of a pigment in water.

The aromatic ring is a cyclic unsaturated ring with aromaticity.

Examples of the aromatic ring include aromatic hydrocarbon rings such as a benzene ring, a naphthalene ring, an anthracene ring, and a pyrene ring; and heteroaromatic rings such as a pyridine ring, a pyrrole ring, a furan ring, a thiophene ring, an imidazolyl ring, and an acridone ring; and the like. Among these, an aromatic hydrocarbon ring is preferable.

As the monomer containing an aromatic ring, a monomer containing an aromatic ring and an ethylenically unsaturated double bond is preferable, and a vinyl monomer containing an aromatic ring is more preferable. Examples of the monomer containing an aromatic ring include styrene, methylstyrene, divinylbenzene, vinylpyridine, diallyl phthalate, and the like, and (meth)acrylate containing an aromatic ring (for example, benzyl acrylate, phenoxyethyl acrylate, and the like).

The monomer containing an aromatic ring may be unsubstituted or may be a substituted monomer substituted with a substituent. Examples of the substituent include a halogen atom, an alkyl group, a carboxylic acid group, a hydroxyl group, and the like.

Examples of the halogen atom include chlorine, bromine, iodine, and the like.

As the alkyl group, an alkyl group having 1 to 12 carbon atoms (preferably 1 to 8 carbon atoms) is preferable, and examples thereof include a methyl group, an ethyl group, a propyl group, a butyl group, hexyl, and the like. The alkyl group may be unsubstituted or may have a substituent similar to the above.

Specific examples of a structural unit derived from a monomer containing an aromatic ring are as follows.

The structural unit derived from the monomer containing an aromatic ring is not limited to the following specific examples.

"*" in each structure indicates a bonding site. "iBu" represents isobutyl, "nBu" represents normal butyl, and "tBu" represents tertiary butyl.

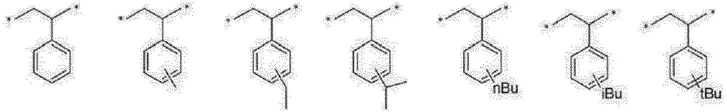

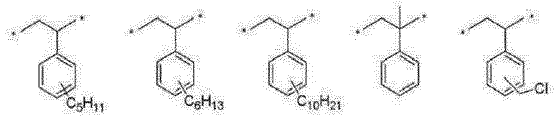

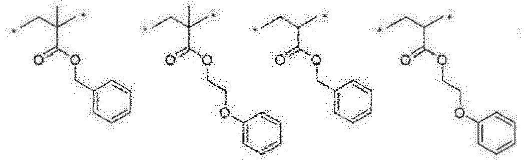

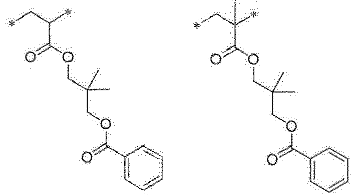

A content of the structural unit derived from the monomer containing an aromatic ring in the pigment dispersion resin A is preferably 50% by mass to 85% by mass, more preferably 50% by mass to 80% by mass, and still more preferably 60% by mass to 80% by mass, with respect to a total amount in one molecule of the pigment dispersion resin A.

The pigment dispersion resin A can contain a structural unit derived from a monomer containing no aromatic ring, in addition to the structural unit derived from the monomer containing an aromatic ring.

Suitable examples of the structural unit derived from a monomer containing no aromatic ring can include alkyl (meth)acrylate and the like.

As the alkyl (meth)acrylate, alkyl (meth)acrylate with an alkyl moiety having 1 to 20 carbon atoms is preferable. Examples of the alkyl (meth)acrylate include methyl (meth)acrylate, ethyl (meth)acrylate, butyl (meth)acrylate, stearyl (meth)acrylate, and the like.

Specific examples of the pigment dispersion resin A include the following copolymers. A mass ratio of monomers in each copolymer can be appropriately selected within a range satisfying a range of a weight-average molecular weight. The present disclosure is not limited to the following specific examples.
· Benzyl methacrylate/acrylic acid copolymer
· Benzyl methacrylate/methacrylic acid copolymer
· Styrene/acrylic acid/alkyl acrylate copolymer
· Styrene/acrylic acid/alkyl methacrylate copolymer
· Benzyl methacrylate/methacrylic acid/alkyl methacrylate copolymer
· Phenoxyethyl methacrylate/methacrylic acid/alkyl methacrylate copolymer
· Phenoxyethyl methacrylate/methacrylic acid/alkyl methacrylate/hydroxyethyl methacrylate copolymer

An acid value of the pigment dispersion resin A is preferably 50 mgKOH/g to 180 mgKOH/g, more preferably 50 mgKOH/g to 150 mgKOH/g, and still more preferably 50 mgKOH/g to 120 mgKOH/g, from the viewpoint of the dispersibility and dispersion stability of the pigment.

The acid value can be measured by titration of an indicator, and is a value measured by a method described in Japanese Industrial Standards (JIS) K0070: 1992.

A weight-average molecular weight (Mw) of the pigment dispersion resin A is preferably 1,000 to 100,000 and more preferably 10,000 to 50,000.

A content of the pigment dispersion resin A in the ink is preferably 10% by mass to 80% by mass and more preferably 25% by mass to 70% by mass with respect to a content of the pigment, from the viewpoint of obtaining satisfactory dispersibility of the pigment.

### (Resin B)

The resin in the ink of the present disclosure preferably contains at least one resin B that is a resin other than the pigment dispersion resin A.

In a case where the resin in the ink of the present disclosure contains the resin B, the movement of ink droplets is prevented due to a thickening action of the resin B in the ink applied onto the recording medium, thereby further improving the image quality of the image. For example, the accuracy of the image is further improved, and the bleeding of the image is further prevented.

The resin B is preferably a water-soluble resin from the viewpoint of more effectively exhibiting the above-described effects.

In the present disclosure, "water-soluble" in the water-soluble resin means a property that the dissolving amount with respect to 100 g of water at 25°C is 1 g or more. The "water-soluble" is preferably a property in which the dissolving amount with respect to 100 g of water at 25°C is 3 g or more (more preferably 10 g or more).

### -Unit X-

From the viewpoint of further improving the blocking resistance of the image and the jettability of the ink, the resin B preferably contains a unit X which is a structural unit derived from a monomer having a ClogP of 2.80 to 5.00.

The fact that the monomer has a ClogP of 2.80 or more contributes to prevention of residue of moisture in the image, and as a result, contributes to improvement of the blocking resistance of the image.

The fact that the monomer has a ClogP of 5.00 or less contributes to prevention of a residual ink in a liquid repellent film provided on a surface to which the ink is jetted from the inkjet head, and as a result, contributes to improvement of the j ettability of the ink.

### In the present disclosure, the structural unit derived from a monomer means a structural unit formed by polymerization of a related monomer.

A ClogP is a parameter representing hydrophobicity of a compound. The higher the ClogP value, the higher the hydrophobicity of the compound.

In the present disclosure, as the ClogP, a ClogP that is calculated using ChemDraw (registered trademark) Professional (ver. 16.0.1.4) manufactured by PerkinElmer Informatics is used.

Hereinafter, a monomer having a ClogP of 2.80 to 5.00, which is a monomer for forming the unit X, will be exemplified.

In the following examples, the numerical values in parentheses mean a ClogP of a related monomer.

Examples of a monomer having a ClogP of 2.80 to 5.00 include
decyl methacrylate (5.87),
isobornyl methacrylate (4.97),
2-ethylhexyl acrylate (4.37),
α-Methylstyrene (3.27),
styrene (2.87),
and the like.

In the resin B, a ratio of the unit X to a total amount of the unit Y, which is a structural unit derived from a monomer having a ClogP of 2.30 or more, is preferably 60% by mass to 100% by mass, and more preferably 80% by mass to 100% by mass.

In the case where the ratio of the unit X is 60% by mass to 100% by mass, the jettability of the ink is further improved.

### -Unit Y-

The unit Y is a structural unit derived from a monomer having a ClogP of 2.30 or more.

The unit Y includes the concept of the unit X and has a broader concept than that of the unit X.

A monomer in the unit Y, which is used for forming a structural unit other than the unit X (that is, a monomer having a Clog P of 2.30 or more and less than 2.80), will be exemplified below.

In the following examples, the numerical values in parentheses mean a ClogP of a related monomer.

Examples of a monomer having a ClogP of 2.30 or more and less than 2.80 include
n-butyl methacrylate (2.69),
n-butyl acrylate (2.38),
and the like.

A content of the unit Y in the resin B is preferably 3% by mass to 80% by mass, more preferably 3% by mass to 50% by mass, and still more preferably 5% by mass to 50% by mass, with respect to a total amount of the resin B.

In a case where the resin B includes the unit Y, the resin B may include a structural unit other than the unit Y (that is, a structural unit derived from a monomer having a ClogP of less than 2.30).

Examples of the monomer having a ClogP of less than 2.30 include a monomer containing an acid group, an alkyl (meth)acrylate having an alkyl moiety having 1 to 3 carbon atoms, and the like, which will be described later.

### -Acid group-

The resin B preferably contains at least one acid group selected from the group consisting of a phosphoric acid group, a sulfonic acid group (that is, a sulfo group), and a carboxylic acid group (that is, a carboxy group).

As a result, the image quality of the image is further improved.

Among the acid groups, the carboxylic acid group is preferable in that the carboxylic acid group easily exhibits the thickening action of the ink and enables the image quality of an image to be improved.

The acid group that may be contained in the resin B may be an acid group neutralized with a base (for example, -COONa) or an unneutralized acid group (for example, -COOH).

In addition, the resin B in the ink may contain both an acid group neutralized with a base and an unneutralized acid group.

In a case where the resin B in the ink contains an acid group neutralized with a base, the water solubility of the resin B is further enhanced, which is preferable.

The base is not limited as long as it can neutralize the acid group. Examples of the base include inorganic bases such as alkali metal hydroxides, alkaline earth metal hydroxides, and organic bases such as organic amines.

Examples of the alkali metal include potassium (K) and sodium (Na).

Examples of the alkaline earth metal include calcium (Ca) and magnesium (Mg).

Examples of the alkali metal hydroxides include potassium hydroxide, sodium hydroxide, and the like.

Examples of the alkaline earth metal hydroxides include calcium hydroxide and magnesium hydroxide.

Examples of the organic amines include ammonia, a primary amine (for example, ethylamine, monoethanolamine, and the like), a secondary amine (for example, diethylamine, ethylenediamine, and the like), and a tertiary amine (for example, triethylamine, triethanolamine, isopropylethylamine, pyrrolidine, piperidine, and the like), and a quaternary ammonium salt. Among these, as the organic amine, an organic amine having a boiling point of 80°C or higher is preferable from the viewpoint of preservation stability.

From the viewpoint of the preservation stability, the base is preferably an alkali metal hydroxide or an organic amine, and more preferably an alkali metal hydroxide or an organic amine having a boiling point of 80°C or higher.

Examples of the organic amine having a boiling point of 80°C or higher include ethylenediamine (117°C), triethylamine (90°C), monoethanolamine (170°C), triethanolamine (208°C), isopropylethylamine (127°C), and pyrrolidine (87°C), piperidine (106°C), and the like.

A content of the acid group in the resin B is preferably 5% by mass to 40% by mass and more preferably 7% by mass to 25% by mass, from the viewpoint of exhibiting the satisfactory thickening action of the ink during the recording.

The resin B preferably contains a carboxylic acid group as an acid group from the viewpoint of exhibiting the satisfactory thickening action of the ink during the recording.

It is more preferable that the resin B contains a carboxylic acid group as an acid group, and 40% by mol or more of the carboxylic acid group is neutralized with a base.

In this case, a proportion of the neutralized carboxylic acid group to the total carboxylic acid group (hereinafter, also referred to as a "neutralization degree of carboxylic acid") is preferably 50% by mol or more, more preferably 60% by mol or more, and still more preferably 80% by mol or more. The upper limit of the neutralization degree of the carboxylic acid group (that is, the proportion of the neutralized carboxylic acid group) can be 100% by mol.

The acid group may be introduced into the resin B by polymerization of a monomer containing the acid group. The resin B preferably contains a structural unit derived from a monomer containing an acid group.

Specific examples of the structural unit derived from a monomer containing an acid group are as follows.

Examples of the structural unit derived from the monomer containing an acid group also include structural units in which the acid groups (for example, -COOH) in the structural units of the following specific examples are neutralized to form salts (for example, -COONa) of the acid groups.

The structural unit derived from the monomer containing an acid group is not limited to these specific examples.

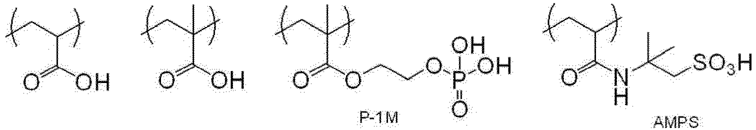

In the case where the resin B contains a structural unit derived from a monomer containing an acid group, a content of the structural unit derived from the monomer containing an acid group is preferably 5% by mass to 40% by mass, and more preferably 8% by mass to 20% by mass, with respect to the total amount of the resin B.

### -Structural Unit Derived From Alkyl (Meth)acrylate Having 1 to 3 Carbon Atoms in Alkyl Moiety-

The resin B may contain a structural unit derived from an alkyl (meth)acrylate having 1 to 3 carbon atoms in an alkyl moiety.

Examples of the alkyl (meth)acrylate having 1 to 3 carbon atoms in an alkyl moiety include methyl (meth)acrylate, ethyl (meth)acrylate, and propyl (meth)acrylate.

A content of the structural unit derived from the alkyl (meth)acrylate having 1 to 3 carbon atoms in an alkyl moiety is preferably 3% by mass to 80% by mass, more preferably 5% by mass to 75% by mass, and still more preferably 15% by mass to 75% by mass, with respect to the total amount of the resin B.

A weight-average molecular weight of the resin B is preferably 5,000 to 100,000. In a case where the weight-average molecular weight of the resin B is in the above-described range, blurring and blocking of an image are further prevented. In addition, the jettability of the ink is more excellent.

The weight-average molecular weight of the resin B is more preferably 10,000 to 80,000 and still more preferably 10,000 to 30,000 in terms of the jettability of the ink.

The acid value of the resin B is preferably 28 mgKOH/g to 230 mgKOH/g. In a case where the acid value is 230 mgKOH/g or less, the thickening effect of the ink can be easily obtained even in a case where a small amount of the water-soluble polymer is used, and the bleeding in an image is suppressed. The acid value is more preferably 50 mgKOH/g or more and furthermore may be 100 mgKOH/g or more, and may be 150 mgKOH/g or more, from the viewpoint of the thickening effect of the ink.

The acid value can be measured by titration of an indicator in the same manner as that of the pigment dispersion polymer A, and is a value measured by a method described in Japanese Industrial Standards (JIS) K0070: 1992.

A glass transition temperature (Tg) of the resin B is preferably 80°C or higher. In a case where the Tg is 80°C or higher, image blocking is further prevented.

The Tg of the resin B is more preferably 95°C or higher and still more preferably 110°C or higher. The upper limit of Tg of the resin B is preferably 250°C or lower in terms of synthesis suitability.

A sample obtained by drying a solution of a water-soluble polymer at 150°C under reduced pressure for 6 hours is prepared and measured at a heating rate of 10°C/min by using a differential scanning calorimeter (DSC) to obtain Tg. As the DSC, for example, a differential scanning calorimeter (DSC) DSC7000X manufactured by Hitachi High-Tech Science Corporation can be used.

A content of the resin B in the ink is preferably 1% by mass to 10% by mass with respect to a total amount of the ink.

In a case where the content of the resin B is 1% by mass or more, the thickening effect of the ink can be easily obtained.

In a case where the content of the resin B is 10% by mass or less, the jettability of the ink is further improved.

### (Preferable ClogP of Pigment Dispersion Resin A and Resin B)

The pigment dispersion resin A preferably has hydrophobicity as compared with the resin B, that is, a resin having a ClogP larger than a ClogP of the resin B from the viewpoint of easily enhancing the dispersibility by adhesion to the pigment. The ClogP of the pigment dispersion resin A is preferably 1.75 or more, more preferably 1.80 or more, and still more preferably 1.85 or more.

On the other hand, from the viewpoint that the resin B is dissolved in the ink and effectively exhibits an action of thickening the ink applied to the recording medium (that is, an effect of improving the image quality), the resin B is preferably hydrophilic as compared with the pigment dispersion resin A, that is, a resin having a ClogP smaller than a ClogP of the pigment dispersion resin A.

The ClogP of the resin B is preferably 1.80 or less, more preferably 1.74 or less, still more preferably 1.72 or less, and still more preferably 1.70 or less.

From the viewpoint of further improving the blocking resistance of the image and the jettability of the ink, the resin B more preferably has a ClogP of 0.90 to 1.50, still more preferably has a ClogP of 0.95 to 1.45, and even still more preferably has a ClogP of 0.97 to 1.43.

In a case where the resin B has a ClogP of 0.90 or more, the blocking resistance of the image is further improved.

In a case where the resin B has a ClogP of 1.50 or less, the ink jettability is further improved.

From the viewpoint of more effectively exhibiting the dispersion stability of the pigment and the thickening action (that is, the image quality improving effect) of the ink applied to the recording medium, the pigment dispersion resin A in the ink of the present disclosure preferably has a ClogP of 1.75 or more, and the resin B preferably has a ClogP of 1.74 or less.

A ClogP of each resin is calculated as a weighted average of ClogPs of individual monomers for forming the resin. For example, a ClogP of the polyacrylic acid is calculated as a ClogP of an acrylic acid, and a ClogP of a polyacrylic acid-polymethacrylic acid copolymer (copolymerization ratio = 50:50 [mass ratio]) is calculated such that each of the ClogP of acrylic acid and the ClogP of the methacrylic acid is multiplied by a mass ratio (in this case, each of which is 0.5) to obtain a total value, and the obtained total value is employed as the ClogP value of the polyacrylic acid-polymethacrylic acid copolymer (copolymerization ratio = 50:50 [mass ratio]).

As the ClogP of each monomer, as described above, the ClogP that is calculated using ChemDraw (registered trademark) Professional (ver. 16.0.1.4) manufactured by PerkinElmer Informatics is used.

### <Water>

The ink of the present disclosure contains water.

A content of water with respect to the total amount of the ink is preferably 10% by mass or more, more preferably 30% by mass or more, and still more preferably 50% by mass or more.

The upper limit of the content of the water with respect to the total amount of the ink depends on a content of another component, but is, for example, 99% by mass, 90% by mass, 80% by mass, and the like.

### <Water-soluble Organic Solvent>

The ink of the present disclosure contains at least one water-soluble organic solvent. Therefore, the jettability of the ink is ensured.

In the present disclosure, "water-soluble" in the water-soluble organic solvent means a property of dissolving 5 g or more in 100 g of water at 20°C.

Examples of the water-soluble organic solvent include alkanediols (polyhydric alcohol) such as glycerin, 1,2,6-hexanetriol, trimethylolpropane, ethylene glycol, and propylene glycol; sugar alcohols; an alkyl alcohol having 1 to 4 carbon atoms such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, triethylene glycol monoethyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol, dipropylene glycol monomethyl ether, dipropylene glycol monoethyl ether, dipropylene glycol mono-n-propyl ether, dipropylene glycol mono-iso-propyl ether, and tripropylene glycol monomethyl ether; amide compounds such as formamide, N,N-dimethylformamide, N,N-dimethylacetamide, 2-pyrrolidone, and N-methylpyrrolidone; and the like.

The water-soluble organic solvent can be used alone, or two or more may be used in combination.

The water-soluble organic solvent preferably contains a first organic solvent having a boiling point of 110°C to 240°C. Since the first organic solvent is contained, a content of the high boiling point solvent (for example, a second organic solvent having a boiling point of 245°C to 300°C) can be relatively reduced. As a result, the drying properties of the ink can be improved, and the image blocking can be suppressed.

Examples of the first organic solvent having a boiling point of 110°C to 240°C include ethylene glycol (198°C), propylene glycol (188°C), dipropylene glycol (230°C), ethylene glycol monomethyl ether (124°C), ethylene glycol diethyl ether (162°C), propylene glycol monoethyl ether (120°C), dipropylene glycol dimethyl ether (171°C), diethylene glycol monomethyl ether (194°C), diethylene glycol diethyl ether (188°C), N-methylpyrrolidone (202°C), and the like.

Examples of the second organic solvent having a boiling point of 245°C to 300°C include diethylene glycol (245°C), glycerin (290°C), 2-pyrrolidone (245°C), triethylene glycol monomethyl ether (248°C), and the like.

As the first organic solvent and the second organic solvent, an alcohol-based organic solvent and an ether-based organic solvent are preferable from the viewpoint of head maintainability. Compared to an organic solvent such as an amide compound (2-pyrrolidone, or the like) that easily interacts with a polymer component, the alcohol-based organic solvent and the ether-based organic solvent are less likely to adhere to the inside of the jetting head. Therefore, the satisfactory maintainability of the jetting head is obtained.

Specific examples of the alcohol-based organic solvent include ethylene glycol, propylene glycol, diethylene glycol, dipropylene glycol, glycerin, and the like.

Examples of the ether-based organic solvent include an alkyl ether of the above-described ethylene glycol, propylene glycol, diethylene glycol, dipropylene glycol, or glycerin, and the like.

Specific examples of the ether-based organic solvent include alkyl ethers such as ethylene glycol monomethyl ether, ethylene glycol diethyl ether, propylene glycol monoethyl ether, dipropylene glycol dimethyl ether, diethylene glycol monomethyl ether, and diethylene glycol diethyl ether.

In the present disclosure, each of the first organic solvent and the second organic solvent is preferably at least one alcohol-based organic solvent selected from the group consisting of ethylene glycol, diethylene glycol, propylene glycol, triethylene glycol, dipropylene glycol, glycerin, and an alkyl ether thereof.

In a case where the water-soluble organic solvent contains the first organic solvent, a mass ratio (S²/S¹) of a content of the second organic solvent (S²) to a content of the first organic solvent (S¹) is preferably in a range of 0 to 0.3. In a case where S²/S¹ is in the above range, the amount of the organic solvent having a high boiling point is prevented to a low level, so that the stickiness of an image after drying is prevented.

S²/S¹ is more preferably in a range of 0 to 0.2 for the same reason as described above.

The ink of the present disclosure may contain an organic solvent other than the above-described water-soluble organic solvent as long as the effect in the present disclosure is not significantly impaired.

The total amount of the first organic solvent and the second organic solvent in the ink is preferably 5% by mass to 30% by mass with respect to a total amount of the ink.

In a case where the total amount of the first organic solvent and the second organic solvent is in the above range, the amount of the organic solvent is prevented to a low level, so that the stickiness of an image after drying is prevented. In a case where the total amount of the first organic solvent and the second organic solvent is 5% by mass or more, the occurrence of clogging of jetting holes due to the solidification of the ink generated at an air interface in the jetting head is prevented, which causes the satisfactory jettability of the ink to be obtained.

The total amount of the first organic solvent and the second organic solvent is more preferably in a range of 7.5% by mass to 40% by mass, still more preferably in a range of 10% by mass to 30% by mass for the same reason as described above.

### -Other Component-

In addition to the above-described components, the ink of the present disclosure may further contain other components, as necessary, as long as the effect in the present disclosure is not significantly impaired.

Examples of other components include anti-drying agents (swelling agents), anti-coloring agents, penetration enhancers, ultraviolet absorbers, preservatives, rust inhibitors, antifoaming agents, viscosity-adjusting agents, pH adjusters, chelating agents, and the like.

### -Physical Properties of Ink-

### 1. Surface Tension

A surface tension of the ink is not particularly limited and may be, for example, 20 mN/m or more. From the viewpoint of coatability on the recording medium, the surface tension is preferably 25 mN/m to 40 mN/m and more preferably 27 mN/m to 37 mN/m.

The surface tension of the ink is a value measured by a plate method using an automatic surface tensiometer, CBVP-Z (manufactured by Kyowa Interface Science Co., Ltd.) under a condition of 25°C.

The surface tension of the ink can be adjusted by, for example, adding a surfactant.

### 2. pH

The pH (25°C ± 1°C) of the ink is preferably 6 to 10 and more preferably 7 to 10.

The pH is a value measured by using a pH meter (for example, WM-50EG manufactured by DKK-TOA CORPORATION) in a state in which a temperature of an ink is adjusted to 25°C in an environment of 25°C.

### 3. Viscosity

The viscosity of the ink is preferably in a range of 1 mPa s to 30 mPa s, more preferably in a range of 1 mPa·s to 20 mPa s, still more preferably in a range of 2 mPa·s to 15 mPa·s, and particularly preferably in a range of 2 mPa·s to 10 mPa·s from the viewpoint of the jettability of the ink and the like.

The viscosity means a value measured under the condition of 25°C. The viscosity can be measured by using, for example, VISCOMETER TV-22 (manufactured by TOKI SANGYO CO. LTD.).

### [Image Recording Method]

An image recording method of the present disclosure includes a step of applying the above-described ink of the present disclosure to a recording medium and recording an image (a dry substance made of the ink of the present disclosure) (hereinafter, also referred to as an ink applying step).

The image recording method of the present disclosure may include other steps, as necessary.

Since the image recording method of the present disclosure records an image by using the ink of the present disclosure, the same effect as that obtained by the ink of the present disclosure can be obtained by the image recording method of the present disclosure.

### -Recording Medium-

As the recording medium in the image recording method of the present disclosure, printing paper mainly composed of cellulose (for example, high-quality paper, coated paper, art paper) can be used.

As the recording medium, a commercially available recording medium can be appropriately selected, and examples thereof include high-quality paper (A) such as "OK Prince High Quality" manufactured by Oji Paper Co., Ltd., "Shiraoi" manufactured by Nippon Paper Industries Co., Ltd., and "New NPI high-quality" manufactured by Nippon Paper Industries Co., Ltd.; high-quality coated paper such as "Silver diamond" manufactured by Nippon Paper Industries Co., Ltd.; lightly coated paper such as "OK Everlight Coat" manufactured by Oji Paper Co., Ltd. and "Aurora S" manufactured by Nippon Paper Industries Co., Ltd.; lightweight coated paper (A3) such as "OK Coat L" manufactured by Oji Paper Co., Ltd. and "Aurora L" manufactured by Nippon Paper Industries Co., Ltd.; coated paper (A2, B2) such as "OK Top Coat +" manufactured by Oji Paper Co., Ltd. and "Aurora Coat" manufactured by Nippon Paper Industries Co., Ltd.; art paper (A1) such as "OK Kanto+" manufactured by Oji Paper Co., Ltd. and "Tokubishi Art" manufactured by Mitsubishi Paper Mills Limited; and the like. It is also possible to use various pieces of photographic paper for ink jet recording.

Among the recording media, so-called coated paper used for general offset printing and the like is preferable. The coated paper is provided with a coating layer obtained by applying a coating material to a surface of high-quality paper, alkaline paper, or the like, which is mainly composed of cellulose and is not generally surface-treated. Among these, coated paper containing a base paper and a coating layer containing kaolin and/or heavy calcium bicarbonate is preferable, and art paper, coated paper, and lightweight coated paper or lightly coated paper are more preferable.

From the viewpoint that the recording medium can be expected to have the effect of preventing the movement of a coloring material, and a satisfactory high-quality image with better color density and color tone that of the related art is obtained, a water absorption coefficient Ka is preferably 0.05 mL/m²·ms^{1/2} to 0.5 mL/m²·ms^{1/2}, more preferably 0.1 mL/m²·ms^{1/2} to 0.4 mL/m²·ms^{1/2}, and still more preferably 0.2 mL/m²·ms^{1/2} to 0.3 mL/m²·ms^{1/2}.

The water absorption coefficient Ka is synonymous with that described in JAPAN TAPPI Pulp and Paper Test Method No. 51: 2000 (Published by Japan Technical Association of the Pulp and Paper). The absorption coefficient Ka is a value calculated from the difference in the amount of water transferred between a contact time of 100 ms and a contact time of 900 ms using an automatic scanning liquid absorptometer KM500Win (manufactured by KUMAGAI RIKI KOGYO Co., Ltd.).

### -Ink Applying Step-

In the ink applying step, the ink of the present disclosure is applied onto a recording medium to record an image.

The Ink applying step may be a step of directly applying the ink of the present disclosure onto the recording medium, or may be a step of applying the ink of the present disclosure to a surface of the recording medium to which a processing liquid is applied. The image recording method in the latter case further includes a processing liquid adding step of applying the processing liquid to the recording medium before the ink applying step. The processing liquid adding step will be described later.

The method for applying the ink is not particularly limited as long as the ink can be applied onto the recording medium, and any aspect using a known method such as a coating method, a dipping method, or an ink jet method may be adopted. Among these, the ink jet method is suitable in that a film (for example, an image) can be formed on various recording media.

It is preferable to adopt an aspect in which the image is recorded by jetting the ink by an inkjet method.

The way of jetting the ink in the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet method, particularly, an ink jet method as a method described in JP1979-59936A (JP-S54-59936A), in which an ink subjected to an action of thermal energy undergoes a sudden volume change, and the ink is jetted from a nozzle by the action force due to this state change, can be effectively used.

As the ink jet method, a method described in paragraphs 0093 to 0105 of JP2003-306623A can also be applied.

The way of using the ink jet head also includes a shuttle method of performing recording while a short serial head is allowed to scan in the width direction of a medium subjected to recording, and a line method of using a line head in which recording elements are arranged correspondingly to the entire range of one side of a medium subjected to recording.

By the line method, an image can be recorded on the entire surface of the medium subjected to recording by scanning of the medium subjected to recording in a direction orthogonal to a direction in which the recording elements are arranged. In the line method, a transport system such as a carriage that allows the short head to perform scanning in the shuttle method is unnecessary. In addition, in the line method, as compared with the shuttle method, a carriage is not required to move, and a complicated scanning control with the medium subjected to recording is unnecessary, and only the medium subjected to recording moves. Therefore, according to the line method, an increase in the recording speed of an image is achieved as compared with the shuttle method.

The ink is preferably applied using an inkjet head having a resolution of 300 dpi or more (more preferably 600 dpi or more and still more preferably 800 dpi or more). Herein, dpi is an abbreviation for dot per inch, and 1 inch is 2.54 cm.

The amount of liquid droplets of the ink jetted from nozzles of the ink jet head is preferably 1 picoliter (pL) to 10 pL and more preferably 1.5 pL to 6 pL, from the viewpoint of obtaining a high-definition image.

In addition, from the viewpoint of suppressing unevenness of an image and improving a connection between continuous gradations, it is also effective to jet the ink by combining the different amount of liquid droplets.

### -Other Steps-

The image recording method of the present disclosure can include an Ink drying step, a heat fixing step, a processing liquid adding step, an ink removing step, and the like, as necessary.

### (a) Ink Drying Step

After applying the ink, the applied ink may be heated and dried.

Examples of means for performing heating and drying include known heating means such as a heater, known blowing means such as a dryer, and means combining these.

Examples of a heating and drying method include a method for applying heat with a heater or the like to an opposite side to a surface of the recording medium to which the ink has been applied, a method for applying hot air or heated air to a surface of the recording medium to which the ink has been applied, a method for applying heat with an infrared heater to a surface of the recording medium to which the ink has been applied or an opposite side to the surface to which the ink has been applied, a method obtained by combining a plurality of these, and the like.

The heating temperature during heating and drying is preferably 55°C or higher, more preferably 60°C or higher, and particularly preferably 65°C or higher. The upper limit of the heating temperature is not particularly limited, but for example, the upper limit can be 150°C and is preferably 130°C.

The time for heating and drying the ink is not particularly limited, but is preferably 3 seconds to 60 seconds, more preferably 5 seconds to 60 seconds, and still more preferably 10 seconds to 30 seconds.

The recording medium may be heated in advance before the ink is applied.

The heating temperature may be appropriately set, but the temperature of the recording medium is preferably 20°C to 50°C, and more preferably 25°C to 40°C.

### (b) Heat Fixing Step

As necessary, the heat fixing step may be carried out after the Ink drying step.

The image is fixed on the recording medium by application of a heat fixing treatment, and the resistance of the image to abrasion can be further enhanced. As the heat fixing step, for example, a heat fixing step described in paragraphs 0112 to 0120 of JP2010-221415A can be applied.

### (c) Processing Liquid Adding Step

The image recording method in the present disclosure may further include the processing liquid adding step of adding the processing liquid onto the recording medium before the ink applying step.

Examples of the processing liquid include a processing liquid that contains water and at least one aggregating agent selected from the group consisting of a polyvalent metal salt, an acidic compound, and a cationic polymer.

As the acidic compound, an acid is preferable, and examples thereof include sulfuric acid, hydrochloric acid, nitric acid, phosphoric acid, polyacrylic acid, acetic acid, glycolic acid, malonic acid, malic acid, maleic acid, propane tricarboxylic acid, ascorbic acid, succinic acid, glutaric acid, fumaric acid, citric acid, tartaric acid, lactic acid, sulfonic acid, orthophosphoric acid, metaphosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, oxalic acid, and benzoic acid.

Examples of the polyvalent metal salt include salts of the Group 2 alkaline earth metals in the Periodic Table (for example, magnesium and calcium), salts of the Group 3 transition metals in the Periodic Table (for example, lanthanum), salts of the Group 13 cations in the Periodic Table (for example, aluminum), and salts of lanthanides (for example, neodymium). As the salts of a metal, carboxylate (formate salt, acetate salt, benzoic acid, or the like), nitrate, chloride, and thiocyanate are suitable.

Preferred examples of the cationic polymer can include poly(vinylpyridine) salt, polyalkylaminoethyl acrylate, polyalkylaminoethyl methacrylate, poly(vinylimidazole), polyethyleneimine, polybiguanide, polyguanide, polyallylamine and derivatives thereof, and the like.

Regarding the processing liquid and the processing liquid adding step, for example, known documents such as WO2019/004485A and WO2019/163581A can be appropriately referred to.

### (d) Ink Removing Step

In the ink removing step, as necessary, the ink (for example, an ink solid adhered by drying) adhered to the jetting head used for ink jet recording is removed by a maintenance liquid. Regarding the details of the maintenance liquid and the ink removing step, the maintenance liquid and the ink removing step described in WO2013/180074A can be applied.

### Examples

Hereinafter, Examples of the present disclosure will be described, but the present disclosure is not limited to the following Examples.

In the following, unless otherwise specified, "parts" and "%" are based on mass.

In the following, "water" means ion exchange water unless otherwise specified.

### [Example 1]

### <Preparation of Lake Y Pigment Dispersion>

The following materials were mixed, and a mixture thus obtained was placed into a kneading device (KDLA-type Dynomill (manufactured by WAB-GROUP) filled with ϕ0.5 mm zirconia beads) and kneaded at 2000 rpm for 90 minutes in the kneading device. A kneaded material thus obtained was taken out and filtered through a 1 µm filter to obtain a lake Y pigment dispersion.

### -Material of Lake Y Pigment Dispersion-

| | |
|---|---|
| · PY168 (lake Y pigment) | 15 parts |
| · Solsperse 43000 (manufactured by The Lubrizol Corporation; ClogP is 1.85) (pigment dispersion resin A) | 5 parts |
| · Water | 80 parts |

### <Preparation of Y Pigment Dispersion Other Than Lake Y Pigment>

### (Synthesis of Water-insoluble Resin P1 (Pigment Dispersion Resin A))

88 g of methyl ethyl ketone was added to a 1000 mL three-neck flask equipped with a stirrer and a cooling pipe, the mixture was heated to 72°C under a nitrogen atmosphere, and a solution obtained by dissolving 0.85 g of dimethyl 2,2'-azobisisobutyrate, 50 g of phenoxyethyl methacrylate, 13 g of methacrylic acid, and 37 g of methyl methacrylate in 50 g of methyl ethyl ketone was added dropwise thereto for 3 hours. After completion of the dropwise addition, a reaction was further carried out for 1 hour, a solution obtained by dissolving 0.42 g of dimethyl 2,2'-azobisisobutyrate in 2 g of methyl ethyl ketone was added, the temperature of the mixture was raised to 78°C, and the mixture was heated for 4 hours. The obtained reaction solution was reprecipitated twice with an excess amount of hexane to precipitate a resin. The precipitated resin is dried to obtain 96.5 g of a phenoxyethyl methacrylate/methyl methacrylate/methacrylic acid (copolymerization ratio [mass ratio] = 50/37/13) copolymer (water-insoluble resin P1; pigment dispersion resin A).

A composition of the obtained water-insoluble resin P1 was confirmed by a proton nuclear magnetic resonance (¹H-NMR) method. A weight-average molecular weight (Mw) of the water-insoluble resin P1 measured by GPC was 49400. Furthermore, an acid value of the water-insoluble resin P1 was measured by a method specified in JIS standard (JIS K 0070:1992), and the acid value was 84.8 mgKOH/g.

The water-insoluble resin P1 had a ClogP of 1.93.

### (Preparation of Y Pigment Dispersion Other Than Lake Y Pigment)

The following materials were kneaded with a roll mill for 2 to 8 hours to obtain a kneaded material.

### -Material of Y Pigment Dispersion Other Than Lake Y Pigment-

| | |
|---|---|
| PY74 (Y pigment other than lake Y pigment) | 10 parts |
| Water-insoluble resin P1 (pigment dispersion resin A) | 4.6 parts |
| Methyl ethyl ketone | 18 parts |
| 1 mol/liter sodium hydroxide aqueous solution | 8.0 parts |

A kneaded material thus obtained was dispersed in 60 parts of water to obtain a dispersion.

Methyl ethyl ketone was removed from the obtained dispersion at 55°C under reduced pressure, and a part of water was further removed. The obtained liquid was cooled to room temperature, and then the liquid was centrifuged at 10000 rpm for 30 minutes by using a high-speed centrifugal cooler 7550 (manufactured by Kubota Seisakusho.) and a 50 mL centrifuge tube, and a supernatant solution other than the precipitate was then recovered.

A volume average particle diameter of the supernatant solution was measured by a dynamic light scattering method with a nanotrac particle size distribution measurement apparatus UPA-EX150 (manufactured by Nikkiso Co., Ltd.), and the measurement result was 91 nm.

Thereafter, a pigment concentration was determined from an absorbance spectrum, and ion exchange water was added to the supernatant solution to obtain a Y pigment dispersion (a Y pigment dispersion other than the lake Y pigment) in which a concentration of PY74 was 14% by mass.

### <Preparation of Solution of Resin B>

A 500 mL three-neck flask equipped with a stirrer, a thermometer, a reflux condenser, and a nitrogen gas introduction tube was charged with propylene glycol (35 g) and heated to 90°C under a nitrogen stream. A mixed solution obtained by mixing 5.55 g of V-601 (2,2'-azobis(2-methylpropionate)dimethyl, radical polymerization initiator; manufactured by FUJIFILM Wako Pure Chemical Corporation), 10.7 g of methacrylic acid (MAA, ClogP = -3.44), 69.3 g of methyl methacrylate (MMA, Clog P = 1.11), 20.0 g of isobornyl methacrylate (IBOMA, Clog P = 4.97), 1.63 g of dodecyl mercaptan, and 65.00 g of propylene glycol was added dropwise at a constant rate under a dropwise addition condition in which the dropwise addition was completed in 2 hours. After completion of the dropwise addition of the mixed solution, a mixture was stirred for 1 hour. Subsequently, a mixed solution obtained by mixing 1.85 g of V-601 and 24.62 g of propylene glycol was added to the obtained reaction mixture, and the mixture was further stirred for 1.5 hours. After adding 120.21 g of propylene glycol to the obtained reaction mixture, 8.56 g of a 50% by mass sodium hydroxide aqueous solution (alkali metal hydroxide) was added dropwise by using a dropping funnel to obtain a solution of a resin B.

Here, IBOMA corresponds to both of a monomer for forming the unit X (that is, a structural unit derived from a monomer having a ClogP of 2.80 to 5.00) and a monomer for forming the unit Y (that is, a structural unit derived from a monomer having a ClogP of 2.30 or more). Methacrylic acid is a monomer containing an acid group, and methyl methacrylate is alkyl (meth)acrylate having an alkyl moiety having 1 to 3 carbon atoms.

A composition of the obtained solution of the resin B was confirmed by ¹H-NMR, and a solid content concentration of the solution of the resin B was 30.1% by mass.

The resin B contained a carboxy group as an acid group in the molecule, and an acid value was 60 mgKOH/g. The resin B had a ClogP of 1.40, a weight-average molecular weight(Mw) of 15,000, and a glass transition temperature(Tg) of 127°C.

The measurement of the acid value and the measurement of Mw were carried out in the same manner as in the water-insoluble resin P1 (the pigment dispersion resin A).

The Tg of the resin B was measured by the following method.

A sample obtained by drying the solution of the resin B at 150°C under reduced pressure for 6 hours was prepared and measured at a heating rate of 10°C/min using a differential scanning calorimeter (DSC) DSC7000X manufactured by Hitachi High-Tech Science Corporation.

In Table 1 to Table 3 described later, in the column of "Unit Y derived from monomer having ClogP of 2.30 or more in resin B (% by mass with respect to all the units Y)", types of a unit Y (that is, a structural unit derived from a monomer having ClogP of 2.30 or more) in the resin B were illustrated. Here, a total of the units Y is set to 100%.

In addition to the unit Y, the resin B contains a structural unit derived from methacrylic acid (MAA, ClogP = -3.44) and a structural unit derived from methyl methacrylate (MMA, ClogP = 1.11).

The column regarding the unit Y is further divided into the column of "Unit X" and the column of "Other than unit X", and the column of "Unit X" and the column of "Other than unit X" illustrates specific structural units which are further divided. As the specific structural units, monomer names (for example, "IBOMA") for forming the structural units are merely indicated.

"Unit X" means structural units derived from a monomer having a ClogP of 2.80 to 5.00, and "Other than unit X" means structural units other than the units X in the unit Y (that is, a structural unit having a ClogP of 2.30 or more and less than 2.80 and a structural unit having a ClogP of more than 5.00).

The abbreviations of the monomer names in Tables mean the following.
- IBOMA: isobonyl methacrylate
- 2-HEA: 2-ethylhexyl acrylate
- α-Me-St: α-methylstyrene
- DMA: styrene
- N-DMA: butyl methacrylate
- N-BA: n-butyl acrylate

### <Preparation of Yellow Ink>

A lake Y pigment dispersion, a Y pigment dispersion other than the lake Y pigment, and a solution of the resin B were used, and various components were mixed to prepare a mixed solution to have the following compositions. After the preparation, coarse particles were removed from the mixed solution with a 5 µm filter to obtain a yellow ink.

The yellow ink had a viscosity of 4.1 mPa·s (25°C), a surface tension of 38.4 mN/m (25°C), and a pH of 8.9 (25°C).

### -Composition of Yellow Ink-

| | |
|---|---|
| · PY168 (lake Y pigment) | 2.5% by mass |
| · PY74 (Y pigment other than lake Y pigment) | 2.5% by mass |
| · Solsperse 43000 (manufactured by The Lubrizol Corporation; ClogP is 1.85) (pigment dispersion resin A) | 1.0% by mass |
| · Water-insoluble resin P1 (pigment dispersion resin A) | 1.0 by mass |
| Resin B | 3.0% by mass |
| · Propylene glycol (PG; manufactured by FUJIFILM Wako Pure Chemical Corporation) | 20% by mass |
| · Glycerin | 2.5% by mass |
| · OLFINE E1010 (manufactured by Nissin Chemical co., ltd., nonionic surfactant) | 1.0% by mass |
| · Water in an amount of total | 100% by mass |

### <Image Recording>

The above-described yellow ink was used as the ink,
an OK top coat (manufactured by Oji Paper Co., Ltd.) was used as a recording medium,
a line head (printer head GELJET GX5000 manufactured by Ricoh) disposed to be tilted with respect to a moving direction of the recording medium is used as the ink jet head, and
an image (yellow image) was recorded as follows.

The yellow ink was applied onto the recording medium from the ink jet head under conditions of a resolution of 1200 × 1200 dots per inch (dpi), a deposited liquid droplet volume of 2.4 picoliter (pL), and a stage speed of 635 mm/sec, and a solid shape of a size of 20 mm × 100 mm.

A surface of the recording medium to which the yellow ink was applied, the surface being opposite to a surface to which the yellow ink was applied, was brought into contact with a hot plate at 60° C, and in this state, hot air at 120°C was blown with respect to the yellow ink on the recording medium for 10 seconds to dry the yellow ink on the recording medium.

As described above, a yellow solid image having a size of 20 mm × 100 mm was recorded on the recording medium to obtain an image recorded article (that is, an image recorded article including the recording medium and the yellow solid image).

### <Evaluation>

The following evaluations were carried out on the above-described image recorded article and the above-described yellow ink.

The results are illustrated in Table 1.

### (Weather Fastness of Image)

The above-described image recorded article was subjected to an accelerated weather fastness test for 2,000 hours with a weatherometer Ci4000 manufactured by Atlas Co., Ltd. in accordance with ISO 4892-2. A rubbing operation with a cotton swab infused with isopropyl alcohol was performed on the yellow solid image on the image recorded article after 2,000 hours.

A spectrophotometric colorimeter CM-2600d manufactured by Konica Minolta, Inc. was used to measure CIELAB values (L*, a*, b*) under conditions of a light source of D65, a viewing angle of 2°, and SCE (specular reflection light removal), on each of the yellow solid image after the accelerated weather fastness test and the rubbing operation and an initial yellow solid image (that is, before the accelerated weather fastness test).

A color difference ΔE was determined based on the measurement result.

Based on the obtained ΔE, the weather fastness of the image was evaluated according to the following evaluation standards.

In the following evaluation standards, the rank of the most excellent weather fastness of the image is 5.

### -Evaluation Standard for Weather Fastness of Image-

5: ΔE is less than 1.0.
4: ΔE is 1.0 or more and less than 1.5.
3: ΔE is 1.5 or more and less than 2.0.
2: ΔE is 2.0 or more and less than 3.0.
1: ΔE is 3.0 or more.

### (Blocking Resistance of Image)

Two of the above-described image recorded articles were prepared.

The two image recorded articles were superimposed in the direction where the yellow solid images were in contact with each other. In this state, the two image recorded articles were pressurized by using an iron plate having the same size as the image recorded articles at 0.5 kg/cm², 30°C, and 1 hour to closely attach the yellow solid images to each other.

Next, the two image recorded articles were peeled off, and the blocking resistance of the images was evaluated according to the following evaluation standards.

In the following evaluation standards, the rank of the most excellent blocking resistance of the image is 5.

### -Evaluation Standard for Blocking Resistance of Image-

5: There is no peeling or transfer of the yellow solid image, and no sound is generated during the peeling.
4: There is no peeling or transfer of the yellow solid image, but a sound is generated during the peeling.
3: There is no peeling of the yellow solid image, but some transfer (20% by area or less with respect to the entire image) is observed.
2: There is no peeling of the yellow solid image, but transfer (more than 20% by area with respect to the entire image) is observed.
1: The yellow solid image is peeled off.

### (Jettability of Ink)

In accordance with an operation of the image recording, after yellow solid images were continuously recorded at a recording speed of 2700 images per hour for 30 minutes, a parallel line pattern (1 cm in length) in which line images of 75 dpi × 2400 dpi are arranged in parallel with respect to the moving direction of the recording medium was recorded. A position at the center of a line width of each of the line images constituting the parallel line pattern was measured by using a general-purpose image processing apparatus DA-6000, and a standard deviation σ of a distance (deviation amount) deviated from the theoretical center position was calculated. Based on the obtained result, the jettability (jetting bending) of the ink was evaluated according to the following evaluation standards.

In the following evaluation standards, the rank of the most excellent jettability of the ink is 5.

### -Evaluation Standard for Jettability-

5: The standard deviation σ is < 2 µm.
4: The standard deviation σ is 2 µm ≤ σ < 3.5 µm.
3: The standard deviation σ is 3.5 µm ≤ σ < 5 µm.
2: The standard deviation σ is 5 µm ≤ σ < 10 µm.
1: The standard deviation σ is 10 µm ≤ σ.

### [Examples 2 to 14]

The same operation as that of Example 1 was carried out except that types of the Y pigments and % by mass with respect to all of the Y pigments were changed as illustrated in Table 1, under a condition in which the total content of the Y pigments (the total content of the lake Y pigment and the Y pigment other than the lake Y pigment) in the ink is maintained as a constant content.

The results are illustrated in Table 1.

### [Examples 15 to 30]

Types and amounts of monomers used to prepare the solution of the resin B were changed, and the same operation as that of Example 1 was carried out, except that types of the unit Y (that is, the structural unit derived from the monomer having a ClogP of 2.30 or more) and % by mass with respect to all the units Y in the resin B were changed as illustrated in Table 2 and Table 3. In these Examples, the content of the unit Y with respect to the total amount of the resin B was set to be the same as the value in Example 1 (that is, 20% by mass with respect to the total amount of the resin).

The result is illustrated in Table 2 and Table 3.

### [Comparative Examples 1 to 4]

The same operation as that of Example 1 was carried out except that types of the Y pigments and % by mass with respect to all of the Y pigments were changed as illustrated in Table 3, under a condition in which the total content of the Y pigments (the total content of the lake Y pigment and the Y pigment other than the lake Y pigment) in the ink is maintained as a constant content. In this case, the evaluation of the blocking resistance and jettability was omitted.

The result is illustrated in Table 3.

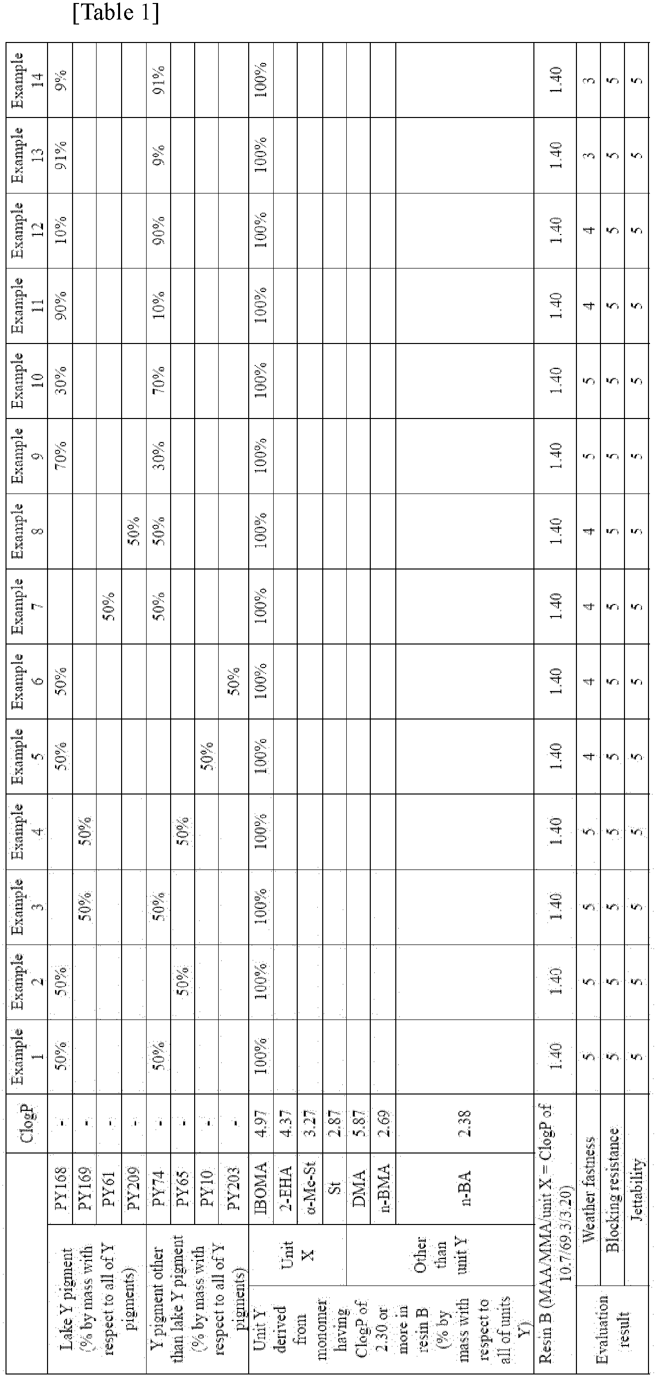

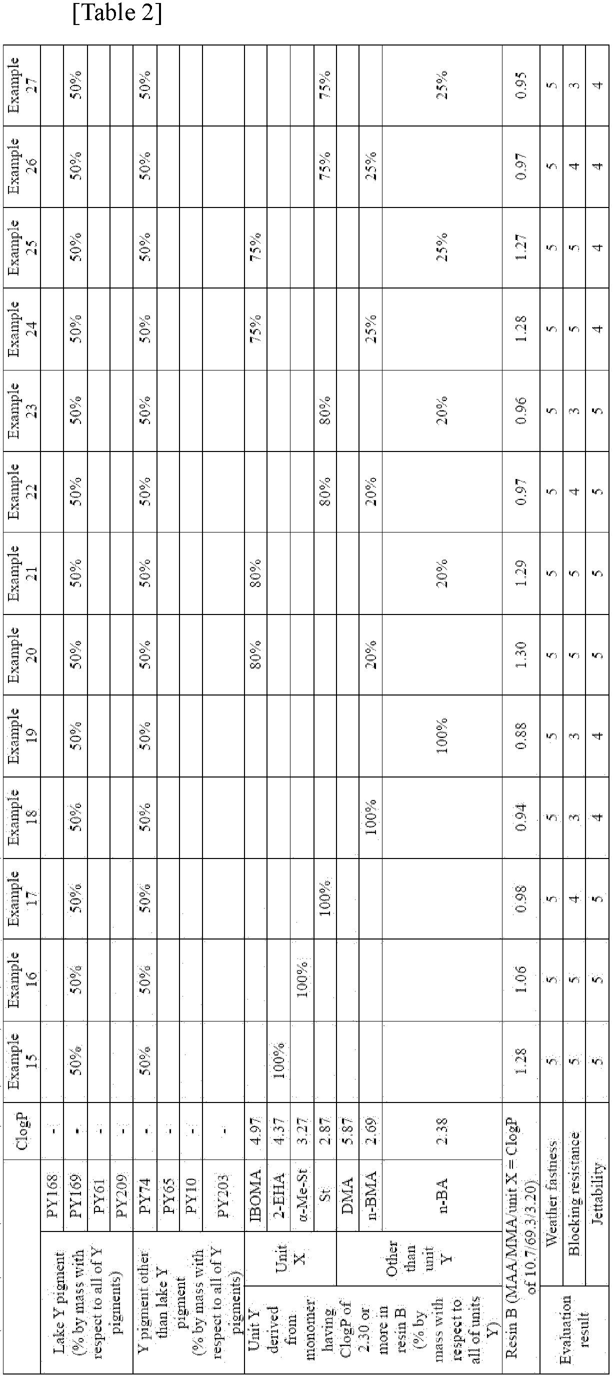

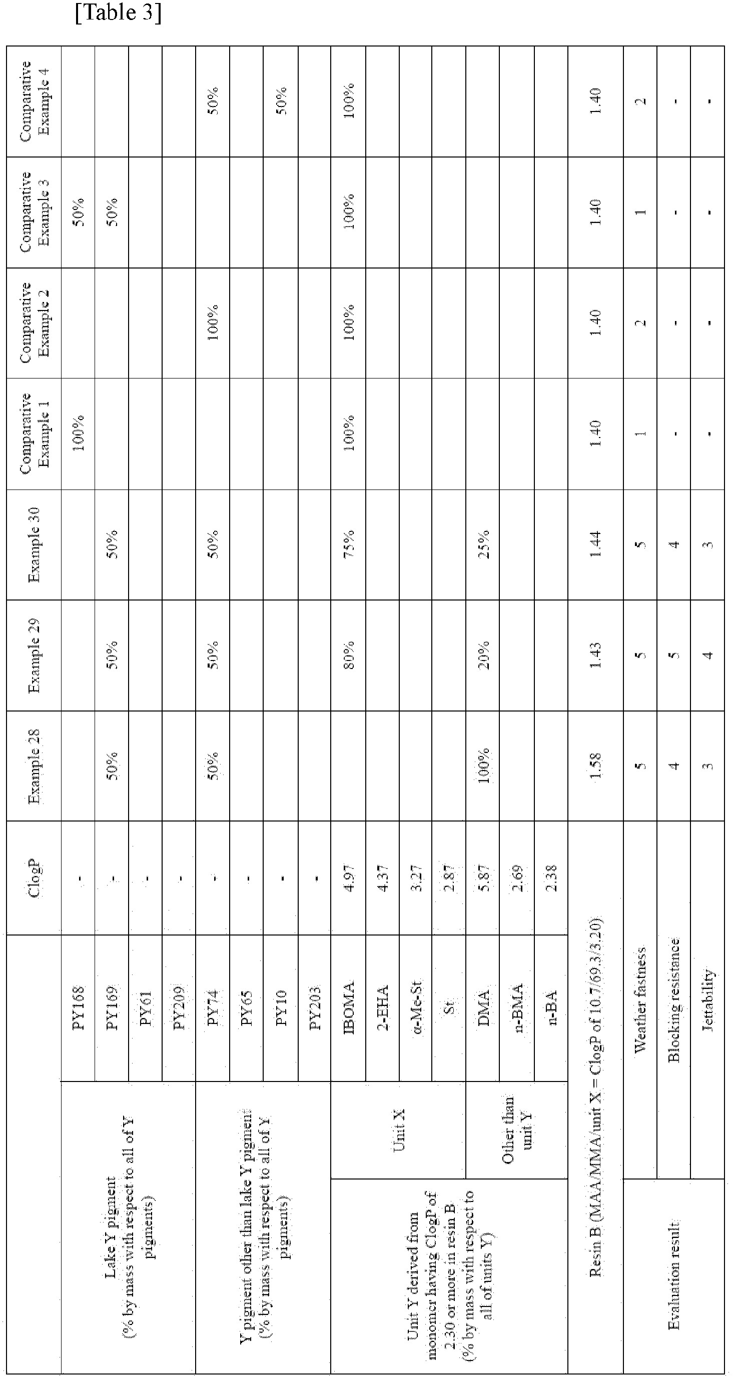

As illustrated in Table 1 to Table 3, according to the ink in each of Examples, which contains the lake yellow pigment, the yellow pigment other than the lake yellow pigment, the resin, the water-soluble organic solvent, and water, the yellow image having excellent weather fastness was able to be recorded.

By contrast, in Comparative Example 1 and Comparative Example 3 in which the ink did not contain the yellow pigment other than the lake yellow pigment, and Comparative Example 2 and Comparative Example 4 in which the ink did not contain the lake yellow pigment, the weather fastness of the recorded yellow image was deteriorated.

Example 1 to Example 12 in which a ratio of the lake yellow pigment to all of the yellow pigments contained in the ink in Examples 1 to 14 was 10% by mass to 90% by mass were more excellent in the weather fastness of the yellow image.

Example 20 to Example 23 in which the ink contained the pigment dispersion resin A and the resin B as a resin, and a ratio of the unit X to the total amount of the unit Y in the resin B was 80% by mass to 100% by mass in Example 20 to Example 27 were more excellent in the j ettability of the ink.

Among Example 1 to Example 30, Example 1 to Example 29 in which the ink contained the pigment dispersion resin A and the resin B as a resin and the resin B had a ClogP of 1.43 or less were excellent in the j ettability of the ink.

Among Example 1 to Example 30, Example 1 to Example 17, Example 20 to Example 22, Example 24 to Example 26, and Example 28 to Example 30 in which the ink contained the pigment dispersion resin A and the resin B as a resin and the resin B had a ClogP of 0.97 or more were more excellent in the blocking resistance of the yellow image.

### [Example 101]

Each component in the following composition was mixed to obtain a processing liquid.

| -Composition of Processing Liquid- | |
|---|---|
| · Diethylene glycol monoethyl ether | 4% by mass |
| · Tripropylene glycol monomethyl ether | 4% by mass |
| · Malonic acid (organic acid) | 17.3% by mass |
| · Propane tricarboxylic acid (organic acid) | 4.3% by mass |
| · Phosphoric acid (inorganic acid) | 4.3% by mass |
| · Benzotriazole | 1% by mass |
| · Ion exchange water in an amount of total | 100% by mass |

The processing liquid was applied on, as a recording medium, an OK top coat (manufactured by Oji Paper Co., Ltd.) with a wire bar coater at about 1.7 g/m², and immediately after that, the recording medium was dried at 50°C for 2 seconds.

Next, a yellow solid image was recorded with the yellow ink of Example 1 on a region to which the processing liquid of the recording medium was applied in the same manner as in the image recording in Example 1 to obtain an image recorded article.

The above-described ink and the above-described yellow solid image were evaluated in the same manner as in the evaluation in Example 1 (that is, three items of the weather fastness of the image, the blocking resistance of the image, and the jettability of the ink were evaluated). As a result, the same results as those of Example 1 were obtained for all three items.

## Claims

1. A yellow ink for inkjet comprising:
a yellow pigment containing a lake yellow pigment and a yellow pigment other than the lake yellow pigment;
a resin;
a water-soluble organic solvent; and
water.

2. The yellow ink for ink jet according to claim 1,
wherein a ratio of a content of the lake yellow pigment to a total of a content of the yellow pigment is 10% by mass to 90% by mass.

3. The yellow ink for inkjet according to claim 1 or 2,
wherein the yellow pigment other than the lake yellow pigment is at least one selected from the group consisting of Pigment Yellow 1, Pigment Yellow 2, Pigment Yellow 3, Pigment Yellow 5, Pigment Yellow 6, Pigment Yellow 10, Pigment Yellow 49, Pigment Yellow 60, Pigment Yellow 65, and Pigment Yellow 73, Pigment Yellow 74, Pigment Yellow 75, Pigment Yellow 97, Pigment Yellow 98, Pigment Yellow 111, Pigment Yellow 116, Pigment Yellow 130, Pigment Yellow 165, Pigment Yellow 167, and Pigment Yellow 203.

4. The yellow ink for ink jet according to any one of claims 1 to 3,
wherein the lake yellow pigment is at least one selected from the group consisting of Pigment Yellow 61, Pigment Yellow 62, Pigment Yellow 133, Pigment Yellow 168, Pigment Yellow 169, Pigment Yellow 205, Pigment Yellow 206, Pigment Yellow 209, and Pigment Yellow 212.

5. The yellow ink for ink jet according to any one of claims 1 to 4,
wherein the resin contains a pigment dispersion resin A and a resin B that is a resin other than the pigment dispersion resin A.

6. The yellow ink for ink jet according to claim 5,
wherein the resin B contains a unit X, which is a structural unit derived from a monomer having a ClogP of 2.80 to 5.00, and
in a case where a structural unit derived from a monomer having a ClogP of 2.30 or more in the resin B is denoted by a unit Y, a ratio of the unit X to a total amount of the unit Y is 60% by mass to 100% by mass.

7. The yellow ink for inkjet according to claim 5 or 6,
wherein the resin B has a ClogP of 0.90 to 1.50.

8. An image recording method comprising:
a step of applying the yellow ink for inkjet according to any one of claims 1 to 7 onto a recording medium by an ink jet method.

9. An image recorded article comprising:
a recording medium; and
a yellow image disposed on the recording medium and formed with the yellow ink for ink jet according to any one of claims 1 to 7.
